Europäisches Patentamt

European Patent Office

Office européen des brevets

(11) Veröffentlichungsnummer: **0 416 325 A2**

# (12) EUROPÄISCHE PATENTANMELDUNG

(21) Anmeldenummer: **90115461.7**

(22) Anmeldetag: **11.08.90**

(51) Int. Cl.⁵: **H04L 1/00**

(30) Priorität: **04.09.89 DE 3929361**

(43) Veröffentlichungstag der Anmeldung:
**13.03.91 Patentblatt 91/11**

(84) Benannte Vertragsstaaten:
**AT DE FR GB IT NL**

(71) Anmelder: **FRAUNHOFER-GESELLSCHAFT
ZUR FÖRDERUNG DER ANGEWANDTEN
FORSCHUNG E.V.**
**Leonrodstrasse 54**
**W-8000 München 19(DE)**

(72) Erfinder: **Heuberger, Albert, Dipl.-Ing.**
**Falkenstrasse 37**
**W-8520 Erlangen(DE)**
Erfinder: **Geiselbrecht, Siegfried, Dipl.-Ing.**
**G.-Hauptmann-Strasse 11**
**W-8520 Erlangen(DE)**
Erfinder: **Seitzer, Dieter, Prof.-Dr.-Ing.**
**Humboldstrasse 14**
**W-8520 Erlangen(DE)**

(74) Vertreter: **Schoppe, Fritz, Dipl.-Ing.**
**Seitnerstrasse 42**
**W-8023 Pullach bei München(DE)**

(54) **Telemetriesender.**

(57) Ein Telemetriesender zum digitalen Übertragen von meteorologischen Meßsignalen zu einer Empfangsstation hat eine Signalverarbeitungseinrichtung und eine Sendeverstärkereinrichtung.

Zur Reduktion der für die Sendeverstärkerein- richtung erforderlichen Sendeleistung werden den Meßdaten zur Erzeugung des digitalen Codes Kontrolldaten hinzugefügt.

FIG.1

## TELEMETRIESENDER

Die vorliegende Erfindung betrifft einen Telemetriesender zum digitalen Übertragen von meteorologischen Meßdaten zu einer Empfangsstation nach dem Oberbegriff des Patentanspruchs 1.

Ein bekannter Telemetriesender dieser Art wird allgemein eingesetzt zum digitalen Übertragen von meteorologischen Meßsignalen von einer Ballonsonde, die den Telemetriesender trägt, zu einer Wetterstation, bei der die meteorologischen Meßsignale empfangen und ausgewertet werden. Ein derartiger, bekannter Telemetriesender hat eine Signalverarbeitungseinrichtung zum Erzeugen eines digitalen, zu sendenden Codes aufgrund einer Mehrzahl von meteorologischen Meßsignalen, sowie eine Sendeverstärkereinrichtung zum Verstärken und Senden des digitalen Codes. Bei den meteorologischen Meßsignalen handelt es sich üblicherweise um die Ausgangssignale von Sensoren für Druck, Temperatur und Feuchtigkeit. Bei Telemetriesendern, die zusammen mit einer Ballonsonde eingesetzt werden, handelt es sich um Geräte, die in hoher Stückzahl üblicherweise für den einmaligen Einsatz gefertigt werden, da ein Telemetriesender häufig bei seinem Einsatz verloren geht. Ein Telemetriesender wird daher nur dann den praktischen Anforderungen gerecht, wenn er klein, leicht und unkompliziert ist. Üblicherweise handelt es sich bei den vom Telemetriesender zu übertragenden Meßsignalen um Signale, die sich zeitlich nur sehr langsam ändern, wie beispielsweise die oben angesprochenen Temperatur-, Feuchtigkeits- und Drucksignale, so daß die betreffenden Meßsignalwerte sich zwischen zwei aufeinanderfolgenden Übertragungszyklen, die üblicherweise um etwa 1 Sekunde voneinander beabstandet sind, nur unwesentlich ändern. Wenn dennoch eine sprunghafte Änderung auftritt, so weist dies auf einen Sensorfehler oder Übertragungsfehler hin, so daß das betreffende, sprunghaft geänderte empfangene Meßsignal als fehlerhaft seitens der Empfangsstation eingestuft und für die Auswertung außer Betracht gelassen werden kann. Mit anderen Worten können bei Telemetriesystemen wegen der speziellen Art der zu übertragenden Meßsignale Meßfehler und Übertragungsfehler schon durch geeignete Maßnahmen am Ort der Empfangsstation ausgeschieden werden, so daß der Telemetriesender in Übereinstimmung mit den oben erwähnten wirtschaftlichen Erfordernissen sehr einfach strukturiert sein kann. Aufgrund postalischer Vorschriften ist die Sendeleistung eines Telemetriesenders auf einen Maximal-Wert begrenzt. Bei bekannten Telemetriesendern wird die zulässige Sendeleistung ausgenutzt, wodurch jedoch vergleichsweise kostenträchtige und schwere Sendeverstärker eingesetzt werden müssen.

Im Hinblick auf diesen Stand der Technik liegt der vorliegenden Erfindung die Aufgabe zugrunde, einen Telemetriesender der eingangs genannten Art so weiterzubilden, daß dessen Herstellungsaufwand und dessen Gewicht vermindert werden können.

Diese Aufgabe wird bei einem Telemetriesender nach dem Oberbegriff des Patentanspruchs 1 durch die im kennzeichnenden Teil des Patentanspruchs 1 angegebenen Merkmale gelöst.

Erfindungsgemäß werden dem digitalen Code für die Meßdaten Kontrolldaten hinzugefügt, wodurch die erforderliche Sendeleistung der Sendeverstärkereinrichtung abgesenkt werden kann, wodurch wiederum Gewichtsprobleme und Kostenprobleme aufgrund von Sendeverstärkereinrichtungen vermieden werden, welche auf die maximal zulässige Sendeleistung ausgelegt sind.

Es ist zwar im Bereich der allgemeinen Datenübertragungstechnik üblich, Datenübertragungsfehler dadurch zu erkennen oder zu korrigieren, daß den zu übertragenden Daten Korrekturdaten oder Prüfbits zugeführt werden. Im vorliegenden Fall ist man jedoch im Stand der Technik davon ausgegangen, daß es aufgrund der obigen, im einzelnen erläuterten Art der zeitlich im wesentlichen unveränderlichen Meßsignale keines Zusatzes von Korrekturbits oder Prüfbits auf seiten des Telemetriesenders bedarf, da aufgrund der speziellen Art der Meßsignale durch einfache Betrachtung der zeitlichen Verläufe derselben seitens der Empfangsstation eine hinreichende Fehlersicherheit erzielbar ist, so daß man insbesondere auch unter Berücksichtigung der Erfordernisse der niedrigen Herstellungskosten im Stand der Technik eine telemetriesenderseitige Erweiterung des Sendecodes für nicht erforderlich gehalten hat. Die Erfindung setzt jedoch diese Code-Erweiterung durch Korrekturdaten dazu ein, die erforderliche Sendeleistung der Sendeverstärkereinheit zu reduzieren, wodurch mit Maßnahmen, die der im Stand der Technik bekannten Vorgehensweise im Bereich der Telemetriesender zuwider laufen, die im Stand der Technik auftretenden Gewichts- und Kostenprobleme aufgrund der dort erforderlichen Sendeleistung ausgeräumt werden.

Bevorzugte Weiterbildungen des erfindungsgemäßen Telemetriesenders bilden den Gegenstand der Unteransprüche.

Nachfolgend wird unter Bezugnahme auf die beiliegende Zeichnung eine bevorzugte Ausführungsform der vorliegenden Erfindung näher erläutert. Es zeigen:

Figur 1 ein Blockdiagramm eines Telemetriesenders; und

Figur 2 ein von dem erfindungsgemäßen Telemetriesender erzeugter Sendecode.

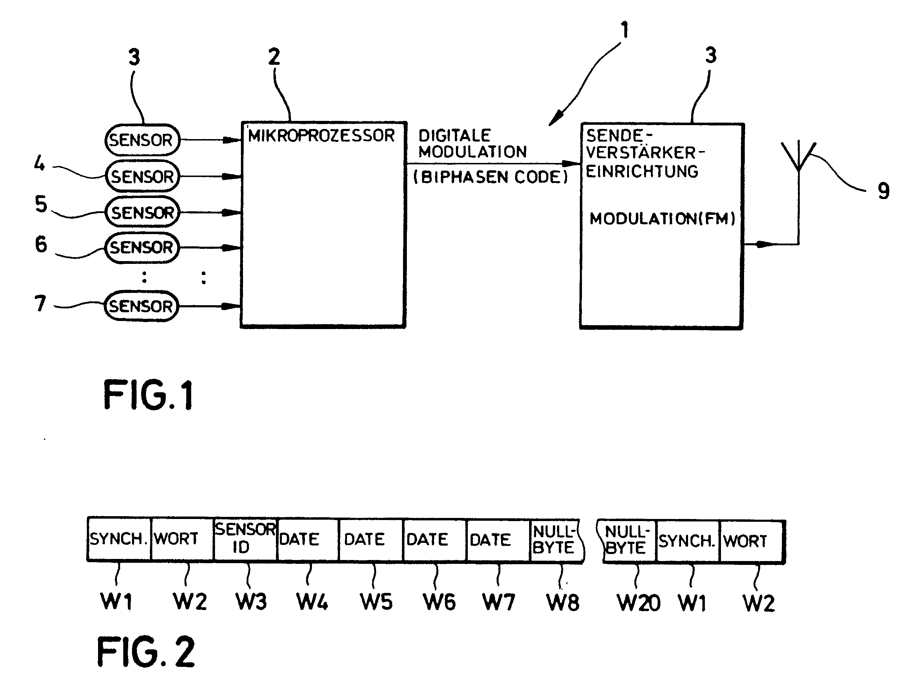

Ein Telemetriesender, der in der Figur 1 in
seiner Gesamtheit mit dem Bezugszeichen 1 bezeichnet ist, dient zum digitalen Übertragen von
meteorologischen Meßsignalen zu einer (nicht gezeigten) Wetterstation, bei der die übertragenen
Meßsignale empfangen und ausgewertet werden.
Der Telemetrie sender umfaßt eine durch einen
Mikroprozessor 2 gebildete Signalverarbeitungseinrichtung, der eingangsseitig eine Mehrzahl von meteorologischen Meßsignalen für Temperatur, Druck,
Feuchtigkeit, usw. von einer Mehrzahl von Sensoren 3 bis 7 zugeführt werden. Die Signalverarbeitungseinrichtung erzeugt einen nachfolgend näher
beschriebenen digitalen Code aufgrund der meteorologischen Meßsignale, welcher in einer Sendeverstärkereinrichtung 8 zu einer Modulation im Frequenzumtastungsverfahren herangezogen wird. Das
Sendesignal wird über eine Antenne 9 ausgesendet.

Die Datenübertragung zwischen dem Telemetriesender 1 und der Wetterstation (nicht dargestellt) erfolgt in einem festen zeitlichen Raster von
aufeinanderfolgenden Rahmen, die, wie dies in Figur 2 zu sehen ist, jeweils 20 Datenbytes zu jeweils 8 Bit umfassen.

Jeder Rahmen beginnt mit einem Synchronisationswort W1, W2 von 2 Byte mit jeweils 8 Bit.
Dem Synchronisationswort W1, W2 folgt ein Sensorkennungswort W3, das eine Länge von 1 Byte
hat und den Sensor bezeichnet, dessen Meßsignal
durch die darauffolgenden Daten übertragen werden soll.

Die nächsten 4 Byte W4 bis W7 sind Meßdaten, die insbesondere einen Zählerstand eines
Telemetriesender-seitigen Zählers innerhalb bestimmter Meßdauer angeben, wobei dieser Zählerstand im Beispielsfall der Meßgröße entspricht, da
die Sensoren 3 - 7 einen Frequenzausgang aufweisen.

Während der übrigen Zeit des Rahmens W1
bis W20 werden Füll-Bytes W8 - W20 gesendet.
Zur Übertragung wird ein invertierter Biphasen-
Pegel-Code gewählt, damit an der Wetterstation
(nicht dargestellt) der Datentakt optimal regeneriert
werden kann.

Die Transformation des in Figur 2 dargestellten
Bit-Stromes in das invertierte Biphasen-Pegel-Signal erfolgt über eine EXOR-Verknüpfung des Datensignales und des Taktsignales.

Erfindungsgemäß werden zur Senkung der erforderlichen Sendeleistung jeweils vier Bit der Daten mit vier Kontrollbit zusammengefaßt. Als Codierung wird ein erweiterter Hamming-Code ($n = 8$,
$k = 4$, $d = 4$) verwendet. Durch diese Codiervorschrift wird aus dem Datenvektor $c_3$, $c_2$, $C_1$, $c_0$ wie

folgt der Sendevektor gebildet:
Sendevektor = $c_3$, $c_2$, $c_1$, $C_0$, $(C_2 + c_1 + c_0)$,$(c_3 + c_1 + C_0)$, $(C_3 + C_2 + C_0)$, $(C_3 + C_2 + C_1)$.

Durch die obige Vorschrift unterscheidet sich
der Sendevektor um mindestens vier Bit von allen
anderen zulässigen Sendevektoren, so daß ein
Hamming-Abstand von $d = 4$ vorliegt. Damit können
bei der Übertragung ein Bit-Fehler korrigiert und
zwei Bit-Fehler erkannt, aber nicht mehr korrigiert
werden. Durch diese Decodierung kann die Sendeleistung um ca. 2,5 dBm gegenüber dem im Stand
der Technik verwendeten uncodierten Fall reduziert
werden.

Das Synchronwort W1, W2 lautet: $45$CF
0100 0100 1100 1111. Dieses Synchronwort W1,
W2 hat sich durch Untersuchungen als besonders
günstig erwiesen, da es sich bezüglich eines Bit-
Stromes aus Sendevektoren um mindestens 2 Bit
unterscheidet, wodurch die Wahrscheinlichkeit einer Fehlsynchronisation stark vermindert wird.

**Ansprüche**

1. Telemetriesender
zum digitalen Übertragen von meteorologischen
Meßsignalen zu einer Empfangsstation
mit einer Signalverarbeitungseinrichtung zum Erzeugen eines digitalen Codes aufgrund wenigstens
eines meteorologischen Meßsignales und
mit einer Sendeverstärkereinrichtung zum Verstärken und Senden des digitalen Codes,
dadurch gekennzeichnet,
daß die Signalverarbeitungseinrichtung (2) zur Reduktion der für die Sendeverstärkereinrichtung (8)
erforderlichen Sendeleistung den Meßdaten ($c_3$, $c_2$,
$c_1$, $c_0$) Kontrolldaten zur Erzeugung des digitalen
Codes hinzufügt.

2. Telemetriesender nach Anspruch 1,
dadurch gekennzeichnet,
daß die Signalverarbeitungseinrichtung durch einen
Mikroprozessor (2) gebildet ist.

3. Telemetriesender nach Anspruch 1 oder 2,
dadurch gekennzeichnet,
daß die Signalverarbeitungseinrichtung (2) jeweils
einer bestimmten Anzahl von Datenbits eine bestimmte Anzahl von Kontrollbits hinzufügt, die aus
den Datenbits abgeleitet sind.

4. Telemetriesender nach einem der Ansprüche 1
bis 3,
dadurch gekennzeichnet,
daß die Signalverarbeitungseinrichtung (2) die Kontrollbits aus den Datenbits durch Anwendung eines
erweiterten Hamming-Codes gewinnt.

5. Telemetriesender nach Anspruch 4,
dadurch gekennzeichnet,
daß je vier Datenbits $c_3$, $c_2$, $c_1$, $c_0$ gemäß folgender Zuordnungsvorschrift durch Zufügen von je vier Kontrollbits, die aus den Datenbits abgeleitet sind, zu dem zu sendenden digitalen Code verarbeitet werden:

$c_3$, $c_2$, $c_1$, $c_0$, $(c_2 + c_1 + c_0)$, $(c_3 + C_1 + c_0)$, $(c_3 + C_2 + c_0)$, $(C_3 + C_2 + C_1)$.

6. Telemetriesender nach einem der Ansprüche 1 bis 5,
dadurch gekennzeichnet,
daß der digitale Code ein anfängliches Synchronisationswort (W1, W2) aufweist.

7. Telemetriesender nach Anspruch 6,
dadurch gekennzeichnet,
daß das Synchronisationswort (W1, W2) folgendermaßen lautet: \$45\$CF = 0100 0101 1100 1111.

8. Telemetriesender nach Anspruch 7,
dadurch gekennzeichnet,
daß dem Synchronisationswort (W1, W2) ein Sensoridentifikationswort (W3) folgt.

FIG.1

FIG.2